# EUROPEAN PATENT SPECIFICATION

(11) **EP 3 480 726 B1**
(45) Date of publication and mention of the grant of the patent: **13.09.2023**
(21) Application number: 17200304.8
(22) Date of filing: 07.11.2017
(51) Int. Cl.: G06V 20/56, G06F 18/25, G06V 20/70

(54) **A VISION SYSTEM AND METHOD FOR AUTONOMOUS DRIVING AND/OR DRIVER ASSISTANCE IN A MOTOR VEHICLE**
SICHTSYSTEM UND VERFAHREN ZUM AUTONOMEN FAHREN UND/ODER ZUR FAHRERASSISTENZ IN EINEM KRAFTFAHRZEUG
SYSTÈME DE VISION ET PROCÉDÉ POUR LA CONDUITE AUTONOME ET/OU D'AIDE À LA CONDUITE DANS UN VÉHICULE À MOTEUR

(43) Date of publication of application: 08.05.2019
(73) Proprietor: Arriver Software AB, 583 30 Linköping (SE)
(72) Inventor: FRI, Johannes, 58331 Linköping (SE); NARBY, Erik, 58663 Linköping (SE); NILSSON, Martin, 58750 Linköping (SE); DANIELS, Oskar, 582 48 Linköping (SE)
(74) Representative: Loveless, Ian Mark

(56) References cited:
- US-A1- 2010 098 295
- BEI HE ET AL: "Accurate and robust lane detection based on Dual-View Convolutional Neutral Network", 2016 IEEE INTELLIGENT VEHICLES SYMPOSIUM (IV), IEEE, 19 June 2016 (2016-06-19), pages 1041-1046, XP032939095, DOI: 10.1109/IVS.2016.7535517 [retrieved on 2016-08-05]
- YANQING WANG ET AL: "Vision-Based Road Detection by Adaptive Region Segmentation and Edge Constraint", INTELLIGENT INFORMATION TECHNOLOGY APPLICATION, 2008. IITA '08. SECOND INTERNATIONAL SYMPOSIUM ON, IEEE, PISCATAWAY, NJ, USA, 20 December 2008 (2008-12-20), pages 342-346, XP031402176, ISBN: 978-0-7695-3497-8
- JOSE M ALVAREZ ET AL: "Road Scene Segmentation from a Single Image", 7 October 2012 (2012-10-07), COMPUTER VISION ECCV 2012, SPRINGER BERLIN HEIDELBERG, BERLIN, HEIDELBERG, PAGE(S) 376 - 389, XP047018630, ISBN: 978-3-642-33785-7 * abstract * * sections 2, 3, 5 *

## Description

The invention relates to a vision system for a motor vehicle, comprising an imaging apparatus adapted to capture images from a surrounding of the motor vehicle, and a data processing apparatus adapted to perform image processing on the images captured by the imaging apparatus, wherein the data processing apparatus is adapted to execute an edge detector adapted to detect edges in the captured images. The invention further relates to a corresponding method for a motor vehicle.

Yellow or white road surface markings, for example, are difficult to detect in images taken by a camera in a motor vehicle if the lines are old or faded for other reasons, and/or on a road having a light color surface such as concrete or light-colored asphalt. Also weather conditions may cause road surface markings to be difficult to detect. For example, such markings or lines may be easy to detect under clouded conditions, but difficult to detect under sunny conditions. Other examples of conditions which are often difficult are sunrise and sunset.

US 8,750,567 B2 discloses a vision method for a motor vehicle adapted to detect road edges in a road of travel for clear path detection. The vision method analyzes images taken by a camera. Images are forwarded to a line-clustering and vanishing-point detection module in order to identify line candidates and to a line-tracking module in order to track line candidates in different frames. A common result is forwarded to a learning-based road edge detection module in order to classify the identified and tracked candidates in order to identify road edges. The identification and tracking of all line candidates is computationally demanding.

US 2010/0098295 A1 (ZHANG WENDE [US] ET AL) 22 April 2010 (2010-04-22) discloses a method for detecting a clear path of travel for a vehicle, wherein clear path detection by image analysis and road geometry data describing road geometry are fused.

The objective underlying the present invention is to provide a vision system and method that detects road surface markings with improved efficiency and accuracy.

The invention solves this objective with the features of the independent claims.

According to the invention, the data processing apparatus is adapted to execute a road classifier adapted to calculate for each picture element of an input image the probability that the picture element belongs to any one of the classes road marking and drivable surface, yielding a road probability image, and the data processing apparatus is adapted to combine the results from said edge detector and from said road classifier in order to detect road markings in images captured by said imaging apparatus.

The invention has realized that the reliability and efficiency of road marking detection can be improved by processing the images through the edge detector and the separate road classifier and combining the results.

The picture elements of an image are classified by the road classifier with respect to at least two categories, namely drivable surface as picture elements that represent regions that appear reasonable for the vehicle to be driven in, and road surface markings like lane markings or road edges.

It is also possible that a picture element that is identified as a road surface marking at the same time is identified as drivable, e.g. arrows, pedestrian crossings, and/or lane markings are typically on the road and are drivable. In general, a probability of belonging to any of said classes can be computed for every picture element. The road classifier may be capable of classifying the picture elements of an input image with respect to more than two classes.

After the classification of the picture elements of an image by road classifier the resulting road probability image is combined with the results from the edge detector so that edges in the images can be identified as road surface markings.

The picture element could be a pixel, a sub-pixel, and/or a group of pixels of an image captured by the imaging device and/or of preprocessed input images.

The vision system comprises an edge filter adapted to remove edges output by said edge detector depending on their probability in the road probability image. Edges in non-drivable segments cannot belong to road surface markings. Edges in drivable segments and/or in segments belonging to road surface markings can belong to actual road surface markings and contain valuable information for driving/guiding the vehicle. By removing edges output by the edge detector, potentially erroneously classified road surface markings can be deleted. Therefore, the reliability of edge detection is improved and computing resources could be saved. The remaining edges are candidates for road surface markings.

Advantageously, the number of edges provided by the edge filter is at most equal and preferably less than the number of edges provided by the edge detector to assure fast computation and further image processing.

The edge filter is adapted to remove edges which are positioned in picture elements having a low probability of belonging to drivable surface in said road probability image. A match between edges and the probability of a picture element of belonging to road surface markings with a low probability, that is the probability is below a threshold, indicates an erroneous detection of a road surface marking. The threshold can be a pre-defined value, which can be defined differently for different driving scenarios, or be dynamically calculated based on image data and/or other vehicle signals.

In a preferred embodiment, the road classifier is a convolutional neural network to achieve reliable and fast performance. Advantageously, the neural network is trained off-line, preferably using manually segmented images and/or synthetic data to achieve a reliable performance.

Preferably, the data processing apparatus comprises a plurality of data processing devices, wherein said edge detector and said road classifier are executed on different of said data processing devices to allow making potentially use of specialized hardware to execute the edge filter and the road classifier efficiently and fast.

Advantageously, the data processing devices are adapted to execute the edge detector and the road classifier in parallel or simultaneously to decrease the wall time between the input of the images and the output of the results. An input image can be directly communicated to the edge detector and the road classifier at the same time.

In a preferred embodiment, the data processing device executing said edge detector comprises a field-programmable gate array (FPGA), an application specific integrated circuit (ASIC), a central processing unit (CPU) and/or a graphics processing unit (GPU). Advantageously, the data processing device executing said road classifier comprises a field-programmable gate array (FPGA) and/or a graphics processing unit (GPU). In these embodiments the data processing apparatus is particularly specialized for the fast and effective performance of the required computations.

The vision system comprises a road marking tracker adapted to fit parametric tracks to edges output by said edge filter, to track said parametric tracks fitted to said edges over several time frames, and to remove edges depending on their probability in the road probability image. In a typical driving scenario, the road surface markings appear in images with a typical shape, a so-called parametric track, e.g. an arrow-like shape for arrows, stripes for pedestrian crossings, and/or lines for lane markings. The parametric track can be a typical shape of any road surface marking. The result of fitting the parametric tracks to the edges can be a probability of matching the shape and in particular of being a road surface marking. The dependence on the probability in the road probability image allows tracking edges under the condition that an edge potentially belongs to road surface markings and is located in the drivable surface only, preferably with a probability above a threshold. Tracking and processing said edges only saves computing resources and can lead to a more efficient and fast computation. The removal and/or weighing of other edges can speed up the road surface marking detection.

In a preferred embodiment, the road marking tracker comprises a temporal filter adapted to perform said tracking. The movement of the vehicle leads to the typical temporal evolution of edges in the images and in particular of road surface markings. The data processing apparatus executes a temporal filter adapted to estimate the typical temporal evolution of the edges based on the vehicle's velocity and/or temporal evolution patterns of the parametric tracks that have been stored in the memory. Based on the typical temporal evolution of the edges and/or parametric tracks the data processing apparatus is adapted to remove and/or weigh down edges that do not fit the actual temporal evolution of edges that is identified in the sequence of images.

The road marking tracker is adapted to remove edges depending on how well they match the estimated parametric tracks. Edges that do not match the estimated parametric tracks are likely to be no surface markings and can be dismissed as road surface markings.

The road marking tracker is adapted to remove edges which are positioned on pixels having a low probability of being road markings in said road probability image, i.e., the probability of being road markings undercuts a pre-defined threshold.

In a preferred embodiment the images captured by the imaging apparatus are preprocessed before being input to said edged detector and/or said road classifier as input images, e.g., smoothing, sharpening, lightening, darkening, and/or changing the resolution of the image captured by the camera could be applied to increase the reliability and/or speed of the image analysis by the edge detector and/or the road classifier.

In another embodiment, the image taken by the camera is input in a raw format to the edge detector and the road classifier to allow an individual and specialized processing of the image.

Preferably, the data processing apparatus is adapted to reduce the resolution of the input image for the road classifier. The road classifier is calculation intense and can run on an image in a lower resolution which will give a good true positive over false positive performance while an edge detection algorithm provides high resolution but poor false positive performance.

In the following the invention shall be illustrated on the basis of preferred embodiments with reference to the accompanying drawings, wherein:

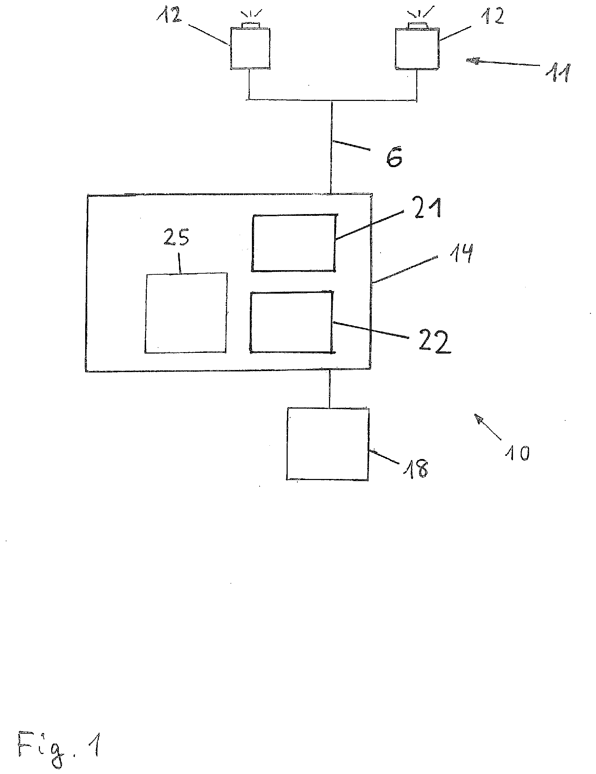

- Fig. 1: shows a schematic diagram of a vision system under the present invention; and
- Fig. 2: shows a schematic flow diagram for illustrating the present invention.

The vision system 10 is mounted in a motor vehicle and comprises an imaging apparatus 11 for capturing images of a region surrounding the motor vehicle, for example a region in front of the motor vehicle. Preferably the imaging apparatus 11 comprises one or more optical imaging devices 12, in particular cameras, preferably operating in the visible and/or infrared wavelength range, where infrared covers near IR with wavelengths below 5 microns and/or far IR with wavelengths beyond 5 microns. In some embodiments the imaging apparatus 11 comprises a plurality of imaging devices 12 in particular forming a stereo imaging apparatus 11. In other embodiments only one imaging device 12 forming a mono imaging apparatus 11 can be used.

The imaging apparatus 11 is coupled to a data processing apparatus 14 adapted to process the image data received from the imaging apparatus 11. The data processing apparatus 14 is preferably a digital device which is programmed or programmable and preferably comprises a microprocessor, microcontroller a digital signal processor (DSP), and/or a microprocessor part in a System-On-Chip (SoC) device, and preferably has access to, or comprises, a data memory 25. The data processing apparatus 14 may comprise a dedicated hardware device, like a Field Programmable Gate Array (FPGA) or an Application Specific Integrated Circuit (ASIC), or an FPGA and/or ASIC part in a System-On-Chip (SoC) device, for performing certain functions, for example controlling the capture of images by the imaging apparatus 11, receiving the electrical signal containing the image information from the imaging apparatus 11, rectifying or warping pairs of left/right images into alignment and/or creating disparity or depth images. The data processing apparatus 14, or part of its functions, can be realized by a System-On-Chip (SoC) device comprising, for example, FPGA, DSP, ARM and/or microprocessor functionality. The data processing apparatus 14 and the memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image processing to possible activation or control of safety device 18 are performed automatically and continuously during driving in real time.

Image and data processing carried out in the processing apparatus 14 advantageously comprises identifying and preferably also classifying possible objects (object candidates) in front of the motor vehicle, such as pedestrians, other vehicles, bi-cyclists and/or large animals, tracking over time the position of objects or object candidates identified in the captured images, and activating or controlling at least one safety device 18 depending on an estimation performed with respect to a tracked object, for example on an estimated collision probability.

The safety device 18 may comprise at least one active safety device and/or at least one passive safety device. In particular, the safety device 18 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals.

The invention is applicable to autonomous driving, where the ego vehicle 2 is an autonomous vehicle adapted to drive partly or fully autonomously or automatically, and driving actions of the driver are partially and/or completely replaced or executed by the ego vehicle 2.

The data processing apparatus 14 preferably comprises a plurality of data processing devices 21, 22. An edge detector 90 and a road classifier 110 are preferably executed by different and separate data processing devices 21, 22. Different and separate data processing devices 21, 22 allow the edge detector 90 and the road classifier 110 to perform computations in parallel at the data processing apparatus 14. The different and separate data processing devices 21, 22 are preferably in communication with each other to allow the interchange of data and/or synchronization of the edge detector 90 and the road classifier 110. Preferably, the data processing device 22 executing the road classifier 110 comprises a FPGA and/or GPU for and the data processing device 21 executing the edge detector 90 comprises a FPGA, ASIC, CPU, and/or GPU.

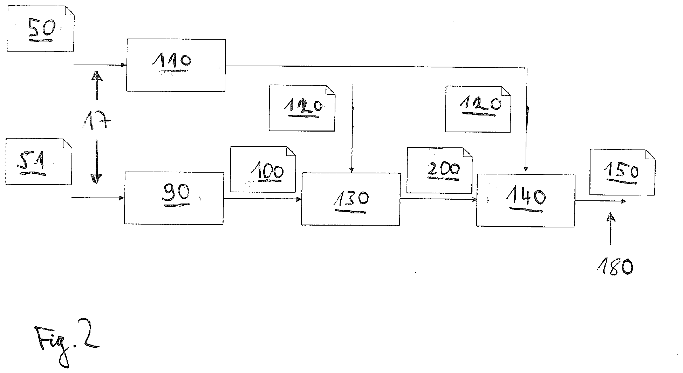

In the following, the invention is described using the flow diagram shown in Figure 2. Herein, images 6, preferably color images, taken by the imaging apparatus 11 are processed by image processing in the data processing apparatus 14, i.e., all steps of the image processing from input 17 of images 50, 51 to output 180 of the road surface marking 150 downstream in Figure 2 are performed in the data processing apparatus 14.

The images 6 are preferably RGB images in the present embodiment, but could as well be color images of other color schemes or grey-scale images. The images 6 could also have been pre-processed, preferably with noise reduction methods and/or suitable filters and/or algorithms. Noise reduction can help to improve the results of the image processing, in particular of the detection of edges 100 and/or road probability image 120. The preprocessed input images 50, 51 serve as input 17 in the edge detector 90 and the road classifier 110 to initiate the lane marking/road surface marking detection by combining preferably a segmenting convolutional neural network as the road classifier 110 with the edge detector 90.

The data processing apparatus 14 is preferably adapted to process the input images 50, 51 in parallel branches of the image processing. Preferably, the data processing apparatus 14 comprises a plurality data processing devices adapted to perform specialized computations. The edge detector 90 and the road classifier 110 can preferably be realized by separate portions of the data processing apparatus 14 with specialized architectures, e.g. a FPGA or GPU or the road classifier 110 and a FPGA, GPU and/or CPU for the edge detector 90. The edge detector 90 and the road classifier 110 are separate portions of the image processing and are performed on the data processing apparatus 14 in parallel, preferably simultaneously.

The edge detector 90 and the road classifier 110 preferably start to operate synchronously with the input 17 of the input images 51 preferably after pre-processing steps. The pre-processing can comprise steps that are in common for the edge detector 90 and/or the neural network 110, or distinct pre-processing steps can be performed, e.g., the resolution of the input image 50 that is used by the road classifier 110 can be reduced to save computing time.

The road classifier 110 is adapted to process the input image 50 and to perform image segmentation and/or classification. The road classifier 110 is preferably a neural network and more preferably a convolutional neural network (CNN) running on a FPGA, GPU, CPU, and/or a combination thereof. The road classifier 110 is preferably adapted to perform image segmentation on a down-sampled input image 50 with a lower resolution than the image 6 taken by the imaging apparatus 11 to reduce the computational load. In another embodiment, the road classifier 110 is adapted to perform image segmentation on a pre-processed image with sub-pixel techniques. The road classifier 110 has preferably been trained off-line by using manually segmented images and/or synthetic data.

Preferably, for each pixel in an input image 50, the road classifier 110 assigns the probability that the respective pixel belongs to any one of the classes road marking and drivable surface, yielding a road probability image 120. The road probability image 120 contains respective probabilities or a pixel-wise value to represent the most probable class of the pixel or picture element. The road probability image 120 partition the image 50 in different regions according to their classification. The road classifier 110 provides the set of road probability image 120 to the edge filter 130 and a road marking tracker 140 which is described below.

Candidates for drivable surface/free space comprise streets or other drivable space. Road surface markings comprise lane markings, pavement markings, pedestrian crossings, or painted-symbols such as turn-lane arrows. Other areas of the road probability image 120 can belong to the non-drivable picture elements comprising obstacles, like houses, trees, cars, pedestrians, or the sky.

The edge detector 90 detects edges 100 on one or more input images 51 to provide a set of edges 100. At this stage of image processing 8, the edges 100 that are identified by the edge detector 90 can reside in every part of the input image 51, i.e., an edge 100 can correspond to at least one picture element of the road probability image 120 that is likely to be a drivable picture element, a surface marking, and/or a non-drivable picture element.

The edge detector 90 can be realized with any suitable edge detection algorithm, including search-based methods, zero-crossing based methods, and/or learning-based methods using artificial intelligence and neural networks.

Preferably, the edge detector 90 detects edge candidates 100 to be verified or falsified. At this point of processing, edge candidates can include edges 100 that correspond to edges 100 in the surrounding of the vehicle or to artificial edges detected by the edge detector 90 in the image 6 without a respective edge 100 in the real world; such an edge is to be falsified and to be removed and/or weighed down during the image processing. The full set of edges 100 include edges 100 that are located in regions of the surrounding that are irrelevant for the motor vehicle, e.g., because it is impossible for the motor vehicle to reach the edge physically.

In a preferred embodiment, for each edge 100 the edge detector 90 estimates a weight that quantifies the likelihood of being an actual edge 100 or of being of relevance for the driving of the vehicle. The weight estimation could be based on the shape, size, position, and/or time evolution of the respective edge 100 or edge candidate. A verification of the edge candidates, i.e., identifying an edge candidate as edge 100, is preferably done on a later stage of image processing. The full set of edges 100, which comprises edges and artificial edges, is forwarded to an edge filter 130 which is described below.

The edge filter 130 is adapted to receive the set of edges 100 from the edge detector 90 and the road probability image 120 from the road classifier 110. On the basis of the road probability image 120 edges 100 that are rated based on the road probability image are removed and/or weighted down. In particular, edges 100 belonging to a non-drivable picture element of the road probability image 120, or edges 100 with a low probability of belonging to a drivable picture element of road probability image 120, are removed. The removed edges 100 are likely to be not important for the driving of the vehicle. The remaining edges 200 are candidates for road surface markings 150 or edges which reside in the surrounding of the vehicle and characterize obstacles or other objects.

The removal of edges 100 in non-drivable picture elements of road probability image 120 and edge candidates of artificial edges reduces the computational load by reducing the number of edges 100 to a smaller number of edges 200 that need to be processed in subsequent image processing steps and/or analysis. In subsequent image processing steps only edges 200 that are likely to be relevant are analyzed and/or processed. The number of edges 200 that put out by the edge filter 130 and is further processed is less than or equal the number of edges in the full set of edges 100 as identified by the edge detector 90, i.e., the edge filter 130 provides a set of edges 200 that is directed to the road marking tracker 140.

The road marking tracker 140 is adapted to receive the set of edges 200 from the edge filter 130 and the set of segments 120 from the road classifier 110 and/or preferably from the memory 25, wherein the memory 25 provides edges 100, 200 and/or identified road surface markings 150 from images 6 that were taken in at least one previous instant of time.

The road marking tracker 140 estimates the temporal evolution of imaged edges 100, 200 based on the vehicle velocity and preferably a sequence of images 6 provided by the memory 25. A temporal filter is applied by the road marking tracker 140 to filter out edges 100, 200 that are identified as not being road surface markings. Thereby edges 100, 200 are removed and/or weighted down based on the temporal evolution of edges 100, 200, depending on how well the edges 100, 200 match the estimated time evolution according to the vehicle velocity. The road marking tracker 140 is adapted to fit a number of parametric tracks to the filtered edge data 100, 200 which preferably filters edges 100, 200 using the temporal filter. Edges 100, 200 which are positioned on pixels with a low probability of being road surface markings are removed depending on how well they match the estimated parametric tracks. The road marking tracker 140 provides the road surface marking 150 and is adapted to communicate with the data processing apparatus 14 and/or perform an output 180 to the safety device 18.

The road surface marking 150 comprises road surface markings and preferably lane markings. Road surface markings can be used to trigger action in the safety device 18 and/or be forwarded to a potential driver of the vehicle. Preferably, lane markings are used by the safety device 18 for vehicle guiding.

The road surface marking 150 can be data that comprises distances between road surface markings and/or between the vehicle and at least one road surface marking. The road surface marking 150 can also be visual data to illustrate the identified road surface markings 150 in the environment.

The edge filter 130 and/or the road marking tracker 140 can preferably be executed on the same data processing device 21 as executing the edge detector 90. Other embodiments with specific data processing devices executing the edge filter 130 and/or the road marking tracker 140 are also possible to make use of highly specialized hardware running the corresponding algorithms.

## Claims

1. A vision system (10) for a motor vehicle, comprising
- an imaging apparatus (11) adapted to capture images (6) from a surrounding of the motor vehicle, and
- a data processing apparatus (14) adapted to perform image processing on the images (6) captured by the imaging apparatus (11), wherein
- the data processing apparatus (14) is adapted to execute an edge detector (90) adapted to detect edges (100) in the captured images (6), wherein
- the data processing apparatus (14) is adapted to execute a road classifier (110) adapted to calculate for each picture element of an input image (6, 50) captured by the imaging apparatus (11) the probability that the picture element belongs to any one of the classes road surface marking and drivable surface, yielding a road probability image (120),
- wherein said data processing apparatus (14) is adapted to combine the results from said edge detector (90) and from said road classifier (110) so that edges in the images can be identified as road surface markings, in order to detect road surface markings in images (6) captured by said imaging apparatus (11), said vision system (10) comprising an edge filter (130) adapted to remove edges (100) output by said edge detector (90) depending on their probability in the road probability image (120), wherein the edge filter (130) is adapted to remove edges (100) which are positioned in picture elements having a probability below a threshold of belonging to drivable surface in said road probability image (120),
**characterized in that** said vision system (10) comprises a road marking tracker (140) adapted to fit parametric tracks to edges (100, 200) output by said edge filter (130), to track said parametric tracks fitted to said edges (100, 200) over several time frames, and to remove edges (100, 200) depending on how well they match the estimated parametric tracks, wherein the road marking tracker (140) is adapted to remove edges (100, 200) which are positioned on pixels having a probability below a threshold of being road surface markings in said road probability image (120).

2. The vision system as claimed in claim 1, **characterized in that** the road classifier (110) is a convolutional neural network.

3. The vision system as claimed in any one of the preceding claims, **characterized in that** the data processing apparatus (14) comprises a plurality of data processing devices (21, 22), wherein said edge detector (90) and said road classifier (110) are executed on different of said data processing devices (21, 22).

4. The vision system as claimed in claim 3, **characterized in that** the data processing devices (21, 22) are adapted to execute the edge detector (90) and the road classifier (110) in parallel.

5. The vision system as claimed in claim 3 or 4, **characterized in that** the data processing device (21) executing said edge detector (90) comprises a field-programmable gate array, a central processing unit and/or a graphics processing unit.

6. The vision system as claimed in any one of claims 3 to 5, **characterized in that** the data processing device (22) executing said road classifier (110) comprises a field-programmable gate array and/or a graphics processing unit.

7. The vision system as claimed in any one of the preceding claims, **characterized in that** the road marking tracker (140) comprises a temporal filter adapted to perform said tracking.

8. The vision system as claimed in any one of the preceding claims, **characterized in that** the images (6) captured by the imaging apparatus (11) are preprocessed before being input to said edge detector (90) and/or said road classifier (11) as input images (50, 51).

9. The vision system as claimed in any one of the preceding claims, **characterized in that** the data processing apparatus (14) is adapted to reduce the resolution of the input image (50) for the road classifier (110).

10. A vision method for a motor vehicle comprising
- capturing images (6) from the surrounding of the motor vehicle, and
- performing image processing on the captured images (6), wherein
- an edge detector (90) detects edges (100) in the captured images (6), wherein
- a road classifier (110) calculates for each picture element of a captured input image (6, 50) the probability that the picture element belongs to any one of the classes road surface marking and drivable surface, yielding a road probability image (120),
- wherein the results from said edge detector (90) and from said road classifier (110) are combined so that edges in the images can be identified as road surface markings, in order to detect road surface markings in captured images (6), wherein an edge filter (130) removes edges (100) output by said edge detector (90) depending on their probability in the road probability image (120), wherein the edge filter (130) removes edges (100) which are positioned in picture elements having a probability below a threshold of belonging to drivable surface in said road probability image (120),
**characterized in that** said vision method comprises a road marking tracker (140) fitting parametric tracks to edges (100, 200) output by said edge filter (130), tracking said parametric tracks fitted to said edges (100, 200) over several time frames, and removing edges (100, 200) depending on how well they match the estimated parametric tracks, wherein the road marking tracker (140) removes edges (100, 200) which are positioned on pixels having a probability below a threshold of being road surface markings in said road probability image (120).

## Patentansprüche

1. Sichtsystem (10) für ein Kraftfahrzeug, das Folgendes beinhaltet:
- eine Bildgebungsvorrichtung (11), die zum Erfassen von Bildern (6) aus einer Umgebung des Kraftfahrzeugs eingerichtet ist, und
- eine Datenverarbeitungsvorrichtung (14), die zum Durchführen von Bildverarbeitung an den von der Bildgebungsvorrichtung (11) erfassten Bildern (6) eingerichtet ist, wobei
- die Datenverarbeitungsvorrichtung (14) zum Ausführen eines Kantendetektors (90) eingerichtet ist, der zum Erkennen von Kanten (100) in den erfassten Bildern (6) eingerichtet ist, wobei
- die Datenverarbeitungsvorrichtung (14) zum Ausführen eines Straßenklassierers (110) eingerichtet ist, der zum Berechnen, für jedes Bildelement eines von der Bildgebungsvorrichtung (11) erfassten Eingangsbilds (6, 50), der Wahrscheinlichkeit, dass das Bildelement zu einer der Klassen Straßenoberflächenmarkierung und befahrbare Oberfläche gehört, eingerichtet ist, was ein Straßenwahrscheinlichkeitsbild (120) erbringt,
- wobei die genannte Datenverarbeitungsvorrichtung (14) eingerichtet ist zum Kombinieren der Ergebnisse aus dem genannten Kantendetektor (90) und aus dem genannten Straßenklassierer (110), so dass Kanten in den Bildern als Straßenoberflächenmarkierungen identifiziert werden können, um von der genannten Bildgebungsvorrichtung (11) erfasste Straßenoberflächenmarkierungen in von der genannten Bildgebungsvorrichtung (11) erfassten Bildern (6) zu erkennen,
das genannte Sichtsystem (10) ein Kantenfilter (130) beinhaltet, das zum Entfernen von Kanten (100), die von dem genannten Kantendetektor (90) ausgegeben werden, in Abhängigkeit von ihrer Wahrscheinlichkeit im Straßenwahrscheinlichkeitsbild (120) eingerichtet ist, wobei das Kantenfilter (130) zum Entfernen von Kanten (100) eingerichtet ist, die in Bildelementen positioniert sind, die eine Wahrscheinlichkeit unter einer Schwelle der Zugehörigkeit zur befahrbaren Oberfläche in dem genannten Straßenwahrscheinlichkeitsbild (120) aufweisen,
**dadurch gekennzeichnet, dass** das genannte Sichtsystem (10) einen Straßenmarkierungs-Tracker (140) aufweist, der zum Anpassen von parametrischen Spuren an Kanten (100, 200) eingerichtet ist, die von dem genannten Kantenfilter (130) ausgegeben werden, um die genannten parametrischen Spuren, die an die genannten Kanten (100, 200) angepasst sind, über mehrere Zeitrahmen zu verfolgen, und um Kanten (100, 200) in Abhängigkeit davon zu entfernen, wie gut sie mit den geschätzten parametrischen Spuren übereinstimmen, wobei der Straßenmarkierungs-Tracker (140) zum Entfernen von Kanten (100, 200) eingerichtet ist, die auf Pixeln positioniert sind, die eine Wahrscheinlichkeit unter einer Schwelle, dass sie Straßenoberflächenmarkierungen in dem genannten Straßenwahrscheinlichkeitsbild (120) sind, aufweisen.

2. Sichtsystem nach Anspruch 1, **dadurch gekennzeichnet, dass** der Straßenklassierer (110) ein Convolutional Neural Network ist.

3. Sichtsystem nach einem der vorhergehenden Ansprüche, **dadurch gekennzeichnet, dass** die Datenverarbeitungsvorrichtung (14) eine Vielzahl von Datenverarbeitungsvorrichtungen (21, 22) beinhaltet, wobei der genannte Kantendetektor (90) und der genannte Straßenklassierer (110) auf verschiedenen der genannten Datenverarbeitungsvorrichtungen (21, 22) ausgeführt werden.

4. Sichtsystem nach Anspruch 3, **dadurch gekennzeichnet, dass** die Datenverarbeitungsvorrichtungen (21, 22) zum parallelen Ausführen des Kantendetektors (90) und des Straßenklassierers (110) eingerichtet sind.

5. Sichtsystem nach Anspruch 3 oder 4, **dadurch gekennzeichnet, dass** die den genannten Kantendetektor (90) ausführende Datenverarbeitungsvorrichtung (21) ein Field Programmable Gate Array, eine zentrale Verarbeitungseinheit und/oder eine Graphikverarbeitungseinheit beinhaltet.

6. Sichtsystem nach einem der Ansprüche 3 bis 5, **dadurch gekennzeichnet, dass** die den genannten Straßenklassierer (110) ausführende Datenverarbeitungsvorrichtung (22) ein Field Programmable Gate Array und/oder eine Graphikverarbeitungseinheit beinhaltet.

7. Sichtsystem nach einem der vorhergehenden Ansprüche, **dadurch gekennzeichnet, dass** der Straßenmarkierungs-Tracker
(140) ein zeitliches Filter beinhaltet, das zum Durchführen des genannten Verfolgens eingerichtet ist.

8. Sichtsystem nach einem der der vorhergehenden Ansprüche, **dadurch gekennzeichnet, dass** die von der Bildgebungsvorrichtung (11) erfassten Bilder (6) vorverarbeitet werden, bevor sie als Eingangsbilder (50, 51) in den genannten Kantendetektor (90) und/oder den genannten Straßenklassierer (11) eingegeben werden.

9. Sichtsystem nach einem der vorhergehenden Ansprüche, **dadurch gekennzeichnet, dass** die Datenverarbeitungsvorrichtung (14) zum Verringern der Auflösung des Eingangsbilds (50) für den Straßenklassierer (110) eingerichtet ist.

10. Sichtverfahren für ein Kraftfahrzeug, das Folgendes beinhaltet:
- Erfassen von Bildern (6) aus der Umgebung des Kraftfahrzeugs und
- Durchführen von Bildverarbeitung an den von erfassten Bildern (6), wobei
- ein Kantendetektor (90) Kanten (100) in den erfassten Bildern (6) erkennt,
wobei
- ein Straßenklassierer (110) für jedes Bildelement eines erfassten Eingangsbilds (6, 50), der Wahrscheinlichkeit berechnet, dass das Bildelement zu einer der Klassen Straßenoberflächenmarkierung und befahrbare Oberfläche gehört, was ein Straßenwahrscheinlichkeitsbild (120) erbringt,
- wobei die Ergebnisse aus dem genannten Kantendetektor (90) und aus dem genannten Straßenklassierer (110) kombiniert werden, so dass Kanten in den Bildern als Straßenoberflächenmarkierungen identifiziert werden können, um Straßenoberflächenmarkierungen in erfassten Bildern (6) zu erkennen,
wobei ein Kantenfilter (130) Kanten (100), die von dem genannten Kantendetektor (90) ausgegeben werden, in Abhängigkeit von ihrer Wahrscheinlichkeit im Straßenwahrscheinlichkeitsbild (120) entfernt ist, wobei das Kantenfilter (130) Kanten (100) entfernt, die in Bildelementen positioniert sind, die eine Wahrscheinlichkeit unter einer Schwelle der Zugehörigkeit zur befahrbaren Oberfläche in dem genannten Straßenwahrscheinlichkeitsbild (120) aufweisen,
**dadurch gekennzeichnet, dass** das genannte Sichtverfahren einen Straßenmarkierungs-Tracker (140) aufweist, der parametrische Spuren an Kanten (100, 200) anpasst, die von dem genannten Kantenfilter (130) ausgegeben werden, die genannten parametrischen Spuren, die an die Kanten (100, 200) angepasst sind, über mehrere Zeitrahmen verfolgt und Kanten (100, 200) in Abhängigkeit davon entfernt, wie gut sie mit den geschätzten parametrischen Spuren übereinstimmen, wobei der Straßenmarkierungs-Tracker (140) Kanten (100, 200) entfernt, die auf Pixeln positioniert sind, die eine Wahrscheinlichkeit unter einer Schwelle, dass sie Straßenoberflächenmarkierungen in dem genannten Straßenwahrscheinlichkeitsbild (120) sind, aufweisen.

## Revendications

1. Système de vision (10) pour véhicule à moteur, comprenant
- un appareil d'imagerie (11) conçu pour capturer des images (6) d'un environnement du véhicule à moteur, et
- un appareil de traitement de données (14) conçu pour réaliser un traitement d'image sur les images (6) capturées par l'appareil d'imagerie (11), dans lequel
- l'appareil de traitement de données (14) est conçu pour exécuter un détecteur de bords (90) conçu pour détecter des bords (100) dans les images capturées (6),
dans lequel
- l'appareil de traitement de données (14) est conçu pour exécuter un classificateur de route (110) conçu pour calculer pour chaque élément d'image d'une image d'entrée (6, 50) capturée par l'appareil d'imagerie (11) la probabilité d'appartenance de l'élément d'image à l'un quelconque d'un marquage au sol et d'une surface praticable des classes, produisant une image de probabilité de route (120),
- dans lequel ledit appareil de traitement de données (14) est conçu pour combiner les résultats dudit détecteur de bords (90) et dudit classificateur de route (110) de manière à ce que des bords dans les images puissent être identifiés comme des marquages au sol, afin de détecter des marquages au sol dans les images (6) capturées par ledit appareil d'imagerie (11),
ledit système de vision (10) comprenant un filtre de bords (130) conçu pour supprimer des bords (100) délivrés par ledit détecteur de bords (90) en fonction de leur probabilité dans l'image de probabilité de route (120), dans lequel le filtre de bords (130) est conçu pour supprimer des bords (100) positionnés dans les éléments d'image ayant une probabilité d'appartenance à une surface praticable inférieure à un seuil dans ladite image de probabilité de route (120),
**caractérisé en ce que** ledit système de vision (10) comprend un traceur de marquage routier (140) conçu pour ajuster des traces paramétriques à des bords (100, 200) délivrés par ledit filtre de bords (130), suivre lesdites traces paramétriques ajustées auxdits bords (100, 200) durant plusieurs plages de temps, et supprimer des bords (100, 200) en fonction de leur degré de correspondance avec les traces paramétriques estimées, dans lequel le traceur de marquage routier (140) est conçu pour supprimer des bords (100, 200) positionnés sur des pixels ayant une probabilité d'être des marquages au sol inférieure à un seuil dans ladite image de probabilité de route (120).

2. Système de vision selon la revendication 1, **caractérisé en ce que** le classificateur de route (110) est un réseau neuronal convolutionnel.

3. Système de vision selon l'une quelconque des revendications précédentes, **caractérisé en ce que** l'appareil de traitement de données (14) comprend une pluralité de dispositifs de traitement de données (21, 22), dans lequel ledit détecteur de bords (90) et ledit classificateur de route (110) sont exécutés sur différents dispositifs desdits dispositifs de traitement de données (21, 22).

4. Système de vision selon la revendication 3, **caractérisé en ce que** les dispositifs de traitement de données (21, 22) sont conçus pour exécuter le détecteur de bords (90) et le classificateur de route (110) en parallèle.

5. Système de vision selon la revendication 3 ou 4, **caractérisé en ce que** le dispositif de traitement de données (21) exécutant ledit détecteur de bords (90) comprend un réseau prédiffusé programmable par l'utilisateur, une unité centrale de traitement et/ou une unité de traitement graphique.

6. Système de vision selon l'une quelconque des revendications 3 à 5, **caractérisé en ce que** le dispositif de traitement de données (22) exécutant ledit classificateur de route (110) comprend un réseau prédiffusé programmable par l'utilisateur et/ou une unité de traitement graphique.

7. Système de vision selon l'une quelconque des revendications précédentes, **caractérisé en ce que** le traceur de marquage routier (140) comporte un filtre temporel conçu pour réaliser ledit suivi.

8. Système de vision selon l'une quelconque des revendications précédentes, **caractérisé en ce que** les images (6) capturées par l'appareil d'imagerie (11) sont prétraitées avant d'être entrées dans ledit détecteur de bords (90) et/ou ledit classificateur de route (11) en tant qu'images d'entrée (50, 51).

9. Système de vision selon l'une quelconque des revendications précédentes, **caractérisé en ce que** l'appareil de traitement de données (14) est conçu pour réduire la résolution de l'image d'entrée (50) pour le classificateur de route (110).

10. Procédé de vision pour véhicule à moteur comprenant
- la capture d'images (6) de l'environnement du véhicule à moteur, et
- la réalisation d'un traitement d'image sur les images capturées (6), dans lequel
- un détecteur de bords (90) détecte des bords (100) dans les images capturées (6), dans lequel
- un classificateur de route (110) calcule pour chaque élément d'image d'une image d'entrée capturée (6, 50) la probabilité d'appartenance de l'élément image à l'un quelconque d'un marquage au sol et d'une surface praticable de classes, produisant une image de probabilité routière (120),
- dans lequel les résultats dudit détecteur de bord (90) et dudit classificateur de route (110) sont combinés de manière à ce que des bords dans les images puissent être identifiés comme marquages au sol, afin de détecter des marquages au sol dans les images capturées (6),
dans lequel un filtre de bords (130) supprime des bords (100) délivrés par ledit détecteur de bords (90) en fonction de leur probabilité dans l'image de probabilité de route (120), dans lequel le filtre de bords (130) supprime des bords (100) positionnés dans les éléments d'image ayant une probabilité d'appartenance à une surface praticable inférieure à un seuil dans ladite image de probabilité de route (120),
**caractérisé en ce que** ledit procédé de vision comprend un traceur de marquage routier (140) qui ajuste des traces paramétriques à des bords (100, 200) délivrés par ledit filtre de bords (130), suit lesdites traces paramétriques ajustées auxdits bords (100, 200) durant plusieurs plages de temps, et supprime des bords (100, 200) en fonction de leur degré de correspondance avec les traces paramétriques estimées, dans lequel le traceur de marquage routier (140) supprime des bords (100, 200) positionnés sur des pixels ayant une probabilité d'être des marquages au sol inférieure à un seuil dans ladite image de probabilité de route (120).
